Europäisches Patentamt

European Patent Office

Office européen des brevets

(11) Veröffentlichungsnummer: **0 191 294 B1**

(12) **EUROPÄISCHE PATENTSCHRIFT**

(45) Veröffentlichungstag der Patentschrift: **11.11.92**

(51) Int. Cl.5: **B01D 17/05**

(21) Anmeldenummer: **86100224.4**

(22) Anmeldetag: **09.01.86**

(54) **Verfahren zur Spaltung von stabilen Dispersionen.**

(30) Priorität: **01.02.85 DE 3503414**

(43) Veröffentlichungstag der Anmeldung:
**20.08.86 Patentblatt  86/34**

(45) Bekanntmachung des Hinweises auf die
Patenterteilung:
**11.11.92 Patentblatt  92/46**

(84) Benannte Vertragsstaaten:
**AT BE CH FR IT LI NL**

(56) Entgegenhaltungen:
**DE-A- 2 411 932**
**DE-C- 509 500**

**CHEMICAL ABSTRACTS, Band 84, Nr. 16, 19.
April 1976, Seite 383, Spalte 2, Zusammenfassungsnr. 111337u, Columbus, Ohio, US**

**SOVIET INVENTIONS ILLUSTRATED, Sektion
Chemie, Woche B29, 29. August 1979, Zusammenfassungsnr. 54211b, Derwent Publications Ltd., London, GB; & SU - A - 626 112
(PETROL PRODUCT COLL) 11-09-1978**

**KIRK-OTHMER, ENCYCLOPEDIA OF CHEMI-
CAL TECHNOLOGY, THIRD EDITION, 1981, Volume 14, Pages 307-308, John Wiley & Sons,**
Inc.

(73) Patentinhaber: **Organocell Gesellschaft für
Zellstoff- und Umwelttechnik mbH
Planegger Strasse 38
W-8000 München 60(DE)**

(72) Erfinder: **Scholler, Johannes, Dipl.-Chem.
Oberhaslau 1
W-8311 Ottering(DE)**
Erfinder: **Feckl, Josef, Dr. Dipl.-Chem.
Institutstrasse 19
W-8000 München 60(DE)**
Erfinder: **Edel, Eugen, Dipl.-Ing.
Am Waldrand 12 A
W-8000 München 70(DE)**

(74) Vertreter: **Dahlmann, Gerhard, Dipl.-Ing. et al
c/o Organocell Gesellschaft für Zellstoff-
und Umwelttechnik mbH Postfach 60 05 63
Planegger Strasse 38
W-8000 München 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Spaltung von stabilen Dispersionen, insbesondere von Emulsionen und Suspensionen in wässrigen Dispersionsmitteln.

Die Beseitigung von in der Industrie anfallenden stabilen Dispersionen wird zu einem immer größeren Problem. Die verschärften Umweltbestimmungen haben zur Folge, daß viele bis heute angewendeten Verfahren nur noch bedingt einsatzfähig sind, weil sie die gesetzlichen Vorschriften nur noch teilweise erfüllen. Insbesondere bei stabilen Ölemulsionen stellt sich das Problem der Wiedergewinnung von Öl und Wasser. Die Trennung dieser Emulsionen wird auch deshalb immer schwieriger, weil die Anzahl der verwendeten Emulgatoren wächst. Auch werden immer mehr Additive den Emulsionen beigegeben, um ganz bestimmte Eigenschaften, z.B. für spangebende Verfahren, zu erfüllen. Einerseits wird eine besonders stabile Ölemulsion gefordert, damit ein Mehrfacheinsatz möglich ist, andererseits aber wirkt sich dies als Nachteil für die herkömmlichen Spaltverfahren aus.

Seit langem ist bekannt, zur Trennung bei Emulsionen die Salzspaltung anzuwenden. Bei diesem Verfahren werden einige Prozent eines Salzes der Emulsion zugefügt und nach einiger Standzeit, vorzugsweise in der Hitze, das im Behälter aufgestiegene Öl vom Dispersionsmittel angetrennt. Das Verfahren ist relativ einfach, die Spaltleistung läßt jedoch zu wünschen übrig, da eine erhebliche Menge an Restöl im Abwasser verbleibt. Hinzu kommt, daß bei stabilen Emulsionen das Verfahren versagt.

Bekannt ist auch, der Dispersion Metallsalze, z. B. Ferro-Aluminium-Sulfat, beizugeben und diese durch Beigabe von Alkali zu Metallhydroxyden auszufällen. Bei diesem Verfahren fällt ein sehr wässriger, öliger Flockenschlamm an, der einer weiteren Bearbeitung zuzuführen ist. Bei sehr stabilen Emulsionen ist dieses Verfahren nicht mit Erfolg einsetzbar.

Bekannt ist schließlich ein Verfahren, bei dem der Emulsion ein selektives Öladsorbtionsmittel zugesetzt wird, das die Ölphase unmittelbar aus dem dispergierten Zustand herausadsorbiert. Die Trennung des Adsorbtionsmittels vom Dispersionsmittel erfolgt anschließend über Filter oder Zentrifugen. Als Adsorbtions- oder Trennmittel wird ein pulverförmiges Substanzgemisch verwendet, dessen wichtigster Bestandteil Kieselsäure ist. Dieses Verfahren ergibt zum Teil befriedigende Ergebnisse. Nachteilig ist jedoch, daß eine beträchtliche Menge an Trennmitteln benötigt wird, was zu relativ hohen Kosten führt.

Man hat auch schon die Behandlung von Öl enthaltenem Abwasser mit Ligninderivaten und zwar mit Salzen der Ligninsulfonsäure vorgeschlagen und eine Flockung durch die Zugabe eines mehrwertigen Metallsalzes und/oder einer organischen Base bewirkt. Das Verfahren erwies sich als sehr aufwendig (JP-A-7 586 846).

Der vorliegenden Erfindung liegt die Aufgabe zugrunde, ein Verfahren zur Spaltung von stabilen Dispersionen zu finden, das möglichst wenig umweltbelastend und kostengünstig durchgeführt werden kann. Das Verfahren soll insbesondere bei Emulsionen und Suspensionen in wässrigen Dispersionsmitteln anwendbar sein. Bei Öl-in-Wasser-Emulsionen soll ein aufbereitetes Abwasser entstehen und eine weiterverwertbare Ölverbindung.

Die Lösung der gestellten Aufgabe wird erfindungsgemäß dadurch erreicht, daß der Dispersion ein wasserlösliches Alkalisalz eines Lignins beigegeben wird und daß durch ein Ansäuern der Mischung ein Ausfällen des Lignins mit den ursprünglich dispergierten Stoffen erfolgt, wonach das ausgefällte Material vom Dispersionsmittel getrennt wird. Durch dieses neue Verfahren werden einige überraschende Effekte erreicht. Es zeigte sich, daß ein Lignin, das durch alkalische Delignifizierung von Holzprodukten hergestellt worden ist, sich besonders gut als Trennmittel eignet. Die dispergierten Stoffe lagern sich sehr schnell am Lignin an, abweichend von bisher bekannten Verfahren, und neben dem ausgefällten Lignin entsteht ein Abwasser mit hohem Reinheitsgrad. Es zeigte sich weiterhin, daß das Lignin bei einer erheblichen Anzahl von stabilen Dispersionen mit großem Erfolg angewendet werden kann. Bei allen verfügbaren Öl-in-Wasser-Emulsionen, die im Labormaßstab getestet wurden, konnte der Ölgehalt im Abwasser unter die gesetzlich vorgeschriebenen Werte gesenkt werden. Letztlich hat das Verfahren auch den Vorteil, daß das ausgefällte Lignin mit den daran angelagerten dispergierten Stoffen verbrannt werden kann, so daß praktisch keinerlei umweltschädigende Produkte zurückbleiben. Das Verfahren ist bei Normaltemperatur ohne Erwärmung durchführbar. Außerdem findet die Ausflockung in kurzer Zeit von 10 bis 15 Minuten statt.

Das Alkalisalz des Lignins kann sowohl als Pulver oder als Lösung der Dispersion beigegeben werden. Als günstig erwies sich, wenn das Lignin als Ligninsalz in einer Menge von 5 bis 80 %, vorzugsweise 10 bis 50 %, der dispergierten Stoffmenge beigegeben wird. Sofern das Ligninsalz als Lösung eingesetzt wird, ergibt eine 20- bis 40%-ige wässrige Lösung gute Ergebnisse.

Das Ansäuern wird bevorzugt durch Zugabe von Mineralsäuren durchgeführt. Die infragekommenden Mineralsäuren sind an sich bekannt.

Das Ansäuern erfolgt bis zur vollständigen Ausfällung des Lignins. Dabei wird der pH-Wert auf 2,0 bis 6,5, vorzugsweise auf 3,0 bis 4,5, eingestellt. Weiterhin ist es zweckmäßig, wenn nach der Ligninausfällung das verbleibende Abwasser neutralisiert wird.

Besonders gute Ergebnisse konnten mit Ligninsalzen erzielt werden, die aus einem Lignin hergestellt wurden, das durch eine Extraktion von Lignozellulose-Material mit wässrigen alkoholischen Lösungsmitteln, gegebenenfalls unter Zusatz von Alkali, gewonnen wird. Dabei wird bevorzugt das in flüssiger Form anfallende Lignin verwendet.

Anhand mehrerer Ausführungsbeispiele wird das Verfahren näher erläutert.

Beispiel 1:

Ein Liter einer Altemulsion aus einer Maschinenfabrik mit einem organischen Gesamtextrakt von 13,1 g pro Liter, einem Mineralölgehalt von 5,95 g pro Liter und einem pH-Wert von 9,2 wird mit 32,5 ml einer 20%-igen Natrium-Lignat-Lösung auf 20 g Lignin, hergestellt durch Extraktion von Lignozellulose-Material mit wässrigen alkoholischen Lösungsmitteln, und 1,6 g Ätznatron in 100 ml $H_2O$ verrührt und anschließend mit 4,3 ml 20%-iger Salzsäure auf einen pH-Wert von 4,0 unter Rühren gebracht. Nach 10-minütigem Rühren wird durch einen Normal-Falten-Filter filtriert und ein Teil des Filterkuchens von Hand abgepreßt.

Es wird ein klares Filtrat erhalten, das 13,7 mg pro Liter organischen Gesamtextrakt und 4,6 mg pro Liter Mineralöl enthält. Der stichfeste Filterkuchen enthält 38,7 % Wasser, 41,0 % organischer Extraktstoffe aus der Emulsion und 20,3 % Lignin.

Beispiel 2:

In 1 Liter einer feindispersen Bariumsulfat-Suspension mit 1 g $BaSO_4$, hergestellt durch Einrühren von 0,61 g Natriumsulfat (0,61 g $NaSO_4$ in 50 ml Wasser gelöst) in eine Lösung von 1,05 g Bariumchlorid ($BaCl_2$ + $2H_2O$) in 950 ml Wasser, werden 8,0 ml einer 20%-igen Lösung des Natriumsalzes von Lignin der nämlichen Zusammensetzung wie im Beispiel 1 eingerührt. Anschließend wird die Suspension mit Salzsäure unter Rühren auf einen pH-Wert von 3,8 gebracht und nach weiteren 15 Minuten gelindem Rühren durch einen Normalfaltenfilter filtriert. Das klare, gut ablaufende Filtrat enthält kein suspendiertes Bariumsulfat mehr. In einer Parallelprobe, bei welcher die Zugabe des Ligninsalzes unterblieb und mit Salzsäure ebenfalls auf pH 3,8 angesäuert wurde, läuft das Filtrat, auch nach wiederholtem Filtrieren, durch feindisperses Bariumsulfat getrübt, ab.

Beispiel 3:

In 1 Liter Leitungswasser werden 18,5 g Presshefe (Bäckerhefe, entsprechend 6,5 g Trockensubstanz) aufgeschlämmt; anschließend wird mit Schwefelsäure auf pH 2,7 angesäuert. Darauf werden 2,5 ml einer 20%-igen Lösung des Natriumsalzes von Lignin der Zusammensetzung wie in den Beispielen 1 und 2 nach vorheriger Verdünnung mit 20 ml Wasser eingerührt. Der pH-Wert steigt auf 3,5. Nach 1 Stunde Stehen hat sich ein Bodensatz aus Lignin und Hefe bei klarem Überstand gebildet. Bei einer Gesamthöhe der Flüssigkeit im Becherglas von 15 cm nimmt der Bodensatz 1,55 cm ein. Das sind 10,3 % des Volumens. Bei einer Parallelprobe ohne Ligninzugabe in die Hefesuspension, aber ebenfalls pH-Einstellung mit Natronlauge auf 3,5, bleibt nach 1 Stunde Stehen 14,1 cm trübe Suspension unter 0,9 cm klarem Überstand, d. h., es bildet sich ein Bodensatz aus Hefe von 94 % des Volumens.

Von den Ansätzen wird nach 1 Stunde Standzeit jeweils die obere Hälfte der Flüssigkeit abgehoben. Von beiden Proben wird jeweils 1 Tropfen auf die Zählkammer des Mikroskops gebracht. Bei der Probe aus dem Ansatz mit Lignin werden 1,16 • $10^3$ Hefezellen pro $mm^3$ gezählt, bei der Parallelprobe 6,1 • $10^4$. Der nach der Ligninausfällung gebildete Bodensatz läßt sich im Gegensatz zur unbehandelten Hefesuspension mit Normalfaltenfilter filtrieren.

**Patentansprüche**

1. Verfahren zur Spaltung von stabilen Dispersionen dadurch gekennzeichnet, daß der Dispersion ein wasserlösliches Alkalisalz eines Lignins beigegeben wird und durch Ansäuern der Mischung ein Ausfällen des Lignins mit den ursprünglich dispergierten Stoffen erfolgt, wonach das ausgefällte Material vom Dispersionsmittel getrennt wird.

2. Verfahren nach Anspruch 1, dadurch gekennzeichnet, daß das Alkalisalz des Lignins in einer Menge von 5 bis 80 %, vorzugsweise 10 bis 50 %, der dispergierten Stoffmenge beigegeben wird.

3. Verfahren nach einem der Ansprüche 1 oder 2, dadurch gekennzeichnet, daß das Alkalisalz des Lignins als 20- bis 40 %ige wässrige Lösung vorliegt.

4. Verfahren nach einem der Ansprüche 1 bis 3, dadurch gekennzeichnet, daß das Ansäuern durch Zugabe von Mineralsäuren erfolgt.

5. Verfahren nach einem der Ansprüche 1 bis 4, dadurch gekennzeichnet, daß das Ansäuern für die Ausfällung des Lignins bis zu pH-Werten von 2,0 bis 6,5, vorzugsweise 3,0 bis 4,5, durchgeführt wird.

6. Verfahren nach einem der Ansprüche 1 bis 5, dadurch gekennzeichnet, daß das nach der Ligninausfällung und Materialabtrennung verbleibende Abwasser neutralisiert wird.

7. Verfahren nach einem der Ansprüche 1 bis 6, dadurch gekennzeichnet, daß zur Herstellung des Alkalisalzes des Lignins ein Lignin verwendet wird, das durch Extraktion von Lignozellulose-Material mit wässrigen alkoholischen Lösungsmitteln, gegebenenfalls unter Zusatz von Alkali, gewonnen wird.

8. Verfahren nach Anspruch 7, dadurch gekennzeichnet, daß das Lignin in flüssiger Form vorliegt.

9. Verfahren nach einem der Ansprüche 1 bis 8, dadurch gekennzeichnet, daß die Spaltung bei Emulsionen oder Suspensionen in wässrigem Dispersionsmittel erfolgt.

## Claims

1. Process for the splitting of stable dispersions, characterized by the addition of a water soluble alkali salt of lignin to the dispersion and by the precipitation of the lignin together with the originally dispersed materials by acidulation of the mixture, after which the precipitated material is separated from the dispersant.

2. Process according to claim 1, characterized by the addition of the alkaline salt of the lignin to the dispersed materials in an amount of 5 to 80 percent, preferably in an amount of 10 to 50 percent.

3. Process according to claim 1 or 2, charactreized by the alkali salt of the lignin being an 20 to 40 percent aqueous solution.

4. Process according to claim 1 to 3, characterized by the acidulation being carried out by the addition of a mineral acid.

5. Process according to claim 1 to 4, characterized by acidulation for the precipitation of the lignin being carried out in a pH range 2.0 to 6.5, preferably in a pH range 3.0 to 4.5.

6. Process according to claims 1 to 5, characterized by a neutralization of the remaining wastewater following the lignin precipitation and separation of the material(s).

7. Process according to claims 1 to 6, characterized by the production of the alkaline salt of the lignin, a lignin is used which was produced by the extraction of lignocellulosic material with aqueous alcohol solvents, if needed by the addition of alkali.

8. Process according to claim 7, characterized by the lignin being in liquid form.

9. Process according to claims 1 to 8, characterized by the splitting of emulsions or suspensions being carried out in aqueous dispersion agents.

## Revendications

1. Procédé de séparation de dispersions stables, caractérisé en-ce qu'à la dispersion est ajouté un sel de métal alcalin, soluble dans l'eau, d'une lignine et en ce que, par acidification du mélange, une précipitation de la lignine a lieu avec les substances initialement dispersées, après quoi la matière précipitée est séparée de l'agent de dispersion.

2. Procédé suivant la revendication 1, caractérisé en ce que le sel de métal alcalin de la lignine est ajouté en une quantité de 5 à 80 %, de préférence de 10 à 50 %, de la quantité de matière dispersée.

3. Procédé suivant l'une des revendications 1 et 2, caractérisé en ce que le sel de métal alcalin de la lignine se présente sous la forme d'une solution aqueuse à 20 jusqu'à 40 %.

4. Procédé suivant l'une des revendications 1 à 3, caractérisé en ce que l'acidification a lieu par addition d'acides minéraux.

5. Procédé suivant l'une des revendications 1 à 4, caractérisé en ce que l'acidification pour la précipitation de la lignine est effectuée jusqu'à des valeurs de pH de 2,0 à 6,5, de préférence de 3,0 à 4,5.

6. Procédé suivant l'une des revendications 1 à 5, caractérisé en ce que l'eau résiduaire subsistant après la précipitation de la lignine et la séparation de matière est neutralisée.

7. Procédé suivant l'une des revendications 1 à 6, caractérisé en ce que, pour la préparation du sel de métal alcalin de la lignine, on utilise une lignine qui est obtenue par extraction d'une matière à base de lignocellulose avec des solvants alcooliques aqueux, éventuellement avec addition d'alcali.

8. Procédé suivant la revendication 7, caractérisé en ce que la lignine se présente sous une forme liquide.

9. Procédé suivant l'une des revendications 1 à 8, caractérisé en ce que la séparation a lieu pour des émulsions ou des suspensions dans un agent de dispersion aqueux.